# EUROPÄISCHE PATENTANMELDUNG

(11) **EP 3 051 751 A1**
(43) Veröffentlichungstag der Anmeldung: **03.08.2016**
(21) Anmeldenummer: 15152695.1
(22) Anmeldetag: 27.01.2015
(51) Int. Cl.: H04L 12/24

(54) **Diagnose einer Fehlkonfiguration eines Netzwerkgerätes**

(71) Anmelder: Siemens Aktiengesellschaft, 80333 München (DE)
(72) Erfinder: Albrecht, Harald, 90475 Nürnberg (DE); Gerlach, Hendrik, 91058 Erlangen (DE); Plaum, Reiner, 91052 Erlangen (DE); Talanis, Thomas, 91336 Heroldsbach (DE)

(57) **Zusammenfassung**

Die Erfindung betrifft ein Verfahren zur Diagnose einer Fehlkonfiguration eines IPv6 ausführenden Netzwerkgerätes (1) eines IPv6-basierten Netzwerks (3) mit wenigstens einem IPv6-Router (7), der Router-Advertisement-Nachrichten an Netzwerkgeräte (1) des Netzwerks (7) sendet. Dabei wird das Netzwerkgerät (1) mit einer Diagnosekomponente (11) versehen, von der die von dem Netzwerkgerät (1) empfangenen Router-Advertisement-Nachrichten jeweils wenigstens teilweise archiviert werden.

## Beschreibung

Die Erfindung betrifft ein Verfahren zur Diagnose einer Fehlkonfiguration eines IPv6 ausführenden Netzwerkgerätes eines IPv6-basierten Netzwerks und ein Netzwerkgerät eines IPv6-basierten Netzwerks.

Dabei bezeichnet IPv6 das so genannte Internet Protocol Version 6 einschließlich des so genannten Internet Control Message Protocol for the Internet Protocol Version 6 (ICMPv6).

Eine wesentliche neue Eigenschaft von IPv6 gegenüber dessen Vorgänger-Protokoll IPv4 ( = Internet Protocol Version 4) ist, dass neu an ein IPv6-Subnetz anzuschließende Netzwerkgeräte automatisch vom Subnetz für den korrekten Betrieb konfiguriert werden können. Hierbei spielen spezielle Nachrichten, die sogenannten "Router-Advertisement-Nachrichten", eine zentrale Rolle. Dabei werden Router-Advertisement-Nachrichten sowohl von Default-Routern als auch wahlweise von Routern für spezielle Routen an alle Netzwerkgeräte verschickt. Neben diesen ersten beiden Funktionen, also dem Mitteilen von Default-Routen sowie spezifischen Routen, steuern Router-Advertisement-Nachrichten noch weitere Funktionen. So werden über Router-Advertisement-Nachrichten außerdem die für das automatische Bilden von IPv6-Adressen notwendigen Subnetz-Präfixe verteilt. Schließlich wird mit Router-Advertisement-Nachrichten auch je nach Betriebsart eines IPv6-Subnetzes festgelegt, ob Nachbargeräte im gleichen IPv6-Subnetz direkt oder nur unter Zuhilfenahme eines Default-Routers kontaktiert werden dürfen.

Heute gängige technische Umsetzungen des IPv6 in einem so genannten "IPv6-Stack" eines Netzwerkgerätes werten normgemäß die in den von dem Netzwerkgerät empfangenen Router-Advertisement-Nachrichten ausgelieferten Informationen aus. Unter einem IPv6-Stack eines Netzwerkgerätes wird hier eine Software zur Implementierung und Ausführung von IPv6 auf dem Netzwerkgerät einschließlich wenigstens eines Transportprotokolls zur Datenübertragung wie des Transmission Control Protocol (TCP) und/oder des User Datagram Protocol (UDP) verstanden. Insbesondere können IPv6-Stacks IPv6-Adress- und/oder IPv6-Routingtabellen enthalten.

Router-Advertisement-Nachrichten können insbesondere Informationen zu Änderungen sowohl von IPv6-Adresstabellen als auch von IPv6-Routingtabellen der Netzwerkgeräte enthalten. Eine von einem Netzwerkgerät empfangene Router-Advertisement-Nachricht dabei nach deren Auswertung im IPv6-Stack gelöscht. Zudem existieren Varianten dieser Nachrichten, die direkt weder auf Adressen noch Routen Auswirkungen haben und stattdessen die sonstige Gerätekonfiguration über das so genannte DHCPv6 ( = Dynamic Host Configuration Protocol Version 6) steuern.

Die Adress- und Routingtabellen eines IPv6-Stacks spiegeln immer nur den aktuellen Zustand eines Netzwerkgerätes wider. Es fehlen damit Informationen, wie dieser Zustand zustande kam. Zudem fehlt auch jegliche Historie, d. h. Informationen über frühere "Zustände". Bei einer zu kurzen Lebensdauer von zu selten ausgestrahlten Nachrichten kann es beispielsweise dazu kommen, dass der Systemzustand zwischen zwei Zuständen hin und her pendelt. Müssen Anwender Netzwerkstörungen in Netzwerkgeräten diagnostizieren, so können sie zur Diagnose nur auf die dauerhaften Informationen aus den Adress- und Routing-Tabellen zugreifen. Was diese Einträge ursprünglich verursacht hat, lässt sich anhand der IPv6-Stacks nicht ermitteln. Das schnelle und korrekte Diagnostizieren von Fehlkonfigurationen von IPv6-Netzwerkgeräten wird dadurch deutlich erschwert.

Bei Problemen mit der Konfiguration von IPv6-Netzwerkgeräten müssen Anwender gegenwärtig daher erst umständlich Mitschnitte des Netzwerkverkehrs und insbesondere der wesentlichen Router-Advertisement-Nachrichten anfertigen. Zudem ist damit nur ein Mitschnitt der aktuellen Situation möglich, nicht aber der Situation, in der der Fehler ursprünglich auftrat. Insbesondere sporadische Fehler sind auf diese Weise nur schwer im Nachhinein zu diagnostizieren. Zudem sind über einen Mitschnitt des Netzwerkverkehrs zwar die verteilten Nachrichten erkennbar, nicht jedoch, ob ein Netzwerkgerät diese überhaupt empfangen und ausgewertet hat. Dazu müssen parallel auf den betroffenen Geräten die Adresstabellen und Routingtabellen der IPv6-Stacks mit überwacht und mitgeschnitten werden. Das ist jedoch insbesondere bei eingebetteten Systemen (Embedded Systems) gegenwärtig überhaupt nicht oder nur sehr schwer für Anwender möglich. Schließlich erfordert das Mitschneiden des Netzwerkverkehrs neben entsprechender Ausrüstung an Software und gegebenenfalls Hardware auch das Fachwissen, die erfassten Daten korrekt auszuwerten.

Der Erfindung liegt die Aufgabe zugrunde, ein verbessertes Verfahren zur Diagnose einer Fehlkonfiguration eines IPv6 ausführenden Netzwerkgerätes und ein verbessertes Netzwerkgerät eines IPv6-basierten Netzwerks anzugeben.

Die Aufgabe wird erfindungsgemäß hinsichtlich des Verfahrens durch die Merkmale des Anspruchs 1 und hinsichtlich des Netzwerkgerätes durch die Merkmale des Anspruchs 9 gelöst.

Vorteilhafte Ausgestaltungen der Erfindung sind Gegenstand der Unteransprüche.

Das erfindungsgemäße Verfahren dient der Diagnose einer Fehlkonfiguration eines IPv6 ausführenden Netzwerkgerätes eines IPv6-basierten Netzwerks mit wenigstens einem IPv6-Router, der Router-Advertisement-Nachrichten an Netzwerkgeräte des Netzwerks sendet. Dazu sieht das Verfahren vor, dass das Netzwerkgerät mit einer Diagnosekomponente versehen wird, von der die von dem Netzwerkgerät empfangenen Router-Advertisement-Nachrichten jeweils wenigstens teilweise archiviert werden.

Das Verfahren ermöglicht somit, die für die Konfiguration des Netzwerkgerätes relevanten Informationen, die in von dem Netzwerkgerät empfangenen Router-Advertisement-Nachrichten enthalten sind, mittels der Diagnosekomponente zu archivieren. Dies erleichtert die Diagnose einer Fehlkonfiguration des Netzwerkgerätes, da anhand der archivierten Informationen rekonstruiert werden kann, wie eine Fehlkonfiguration zustande kam, so dass durch Konfigurationsfehler verursachte Netzwerkstörungen schnell erkannt und behoben werden können. Insbesondere ist keine gesonderte Aufzeichnung des Datenverkehrs zwischen Routern und Netzwerkgeräten im Netzwerk erforderlich.

Eine Ausgestaltung der Erfindung sieht vor, dass von dem Netzwerkgerät wenigstens eine IPv6-Adresstabelle geführt wird, und dass von der Diagnosekomponente Adressinhalte der wenigstens einen IPv6-Adresstabelle archiviert werden. Vorzugsweise werden dabei bei jeder Änderung einer IPv6-Adresstabelle lediglich die Änderungen der IPv6-Adresstabelle von der Diagnosekomponente archiviert.

Eine weitere Ausgestaltung der Erfindung sieht vor, dass von dem Netzwerkgerät eine IPv6-Routingtabelle geführt wird, und dass von der Diagnosekomponente Routinginhalte der IPv6-Routingtabelle archiviert werden. Vorzugsweise werden dabei bei jeder Änderung einer IPv6-Routingtabelle lediglich die Änderungen der IPv6-Routingtabelle von der Diagnosekomponente archiviert.

Die beiden vorgenannten Ausgestaltungen sehen also vor, neben den wesentlichen Inhalten der Router-Advertisement-Nachrichten, die von einem Netzwerkgerät empfangen werden, auch wenigstens die Änderungen von dem Netzwerkgerät geführter IPv6-Adress- und/oder IPv6-Routingtabellen zu archivieren. Dadurch werden nicht nur die Ursache einer Konfigurationsänderung eines Netzwerkgerätes, nämlich der Inhalt der Router-Advertisement-Nachrichten, sondern auch deren Auswirkung auf die von dem Netzwerkgerät geführten IPv6-Adress- und/oder IPv6-Routingtabellen archiviert. Dies erleichtert weiter die Diagnose von Fehlkonfigurationen des Netzwerkgerätes durch einen direkten Vergleich von Ursache und Wirkung von Konfigurationsänderungen.

Von der Diagnosekomponente archivierte Daten werden beispielsweise mittels der Diagnosekomponente selbst zur Diagnose einer Fehlkonfiguration des Netzwerkgerätes ausgewertet. Alternativ oder zusätzlich werden von der Diagnosekomponente archivierte Daten beispielsweise mittels eines Webservers visualisiert.

Diese Ausgestaltungen der Erfindung ermöglichen eine Diagnose von Fehlkonfigurationen eines Netzwerkgerätes ohne Spezialkenntnisse im Aufzeichnen und Auswerten des IPv6-Datenverkehrs im Netzwerk, indem die mittels der Diagnosekomponente archivierten Daten durch die Diagnosekomponente selbst ausgewertet und/oder mittels eines Webservers geeignet visualisiert werden.

Eine weitere Ausgestaltung der Erfindung sieht vor, dass von jeder von dem Netzwerkgerät empfangenen Router-Advertisement-Nachricht wenigstens eine IPv6-Adresse des Absenders der Router-Advertisement-Nachricht und jede eine Konfiguration des Netzwerkgerätes ändernde Information von der Diagnosekomponente archiviert werden.

Diese Ausgestaltung der Erfindung zielt darauf ab, nur die für die Diagnose von Fehlkonfigurationen wesentlichen Inhalte der Router-Advertisement-Nachrichten zu archivieren. Die Archivierung der IPv6-Adresse des Absenders einer Router-Advertisement-Nachricht berücksichtigt dabei die Möglichkeit, dass ein Netzwerkgerät von mehr als einem Router Router-Advertisement-Nachricht empfangen kann, so dass es zur Identifizierung und Behebung der Ursache einer Fehlkonfiguration des Netzwerkgeräts nützlich sein kann, den die Fehlkonfiguration verursachenden Router anhand seiner IPv6-Adresse zu identifizieren.

Ein erfindungsgemäßes Netzwerkgerät eines IPv6-basierten Netzwerks umfasst einen IPv6-Stack zur Implementierung und Ausführung von IPv6 und eine Diagnosekomponente, die zur Durchführung des erfindungsgemäßen Verfahrens ausgebildet ist. Dabei weist der IPv6-Stack beispielsweise eine Programmierschnittstelle zur Anwendungsprogrammierung auf und die Diagnosekomponente ist als eine über diese Programmierschnittstelle mit dem IPv6-Stack verbundene Software realisiert. Alternativ ist die Diagnosekomponente beispielsweise als ein Field Progammable Gate Array realisiert. Ferner weist das Netzwerkgerät optional einen Webserver auf, der zur Visualisierung von der Diagnosekomponente archivierter Daten ausgebildet ist.

Ein derartiges Netzwerkgerät ermöglicht die Durchführung des erfindungsgemäßen Verfahrens mit den oben bereits genannten Vorteilen.

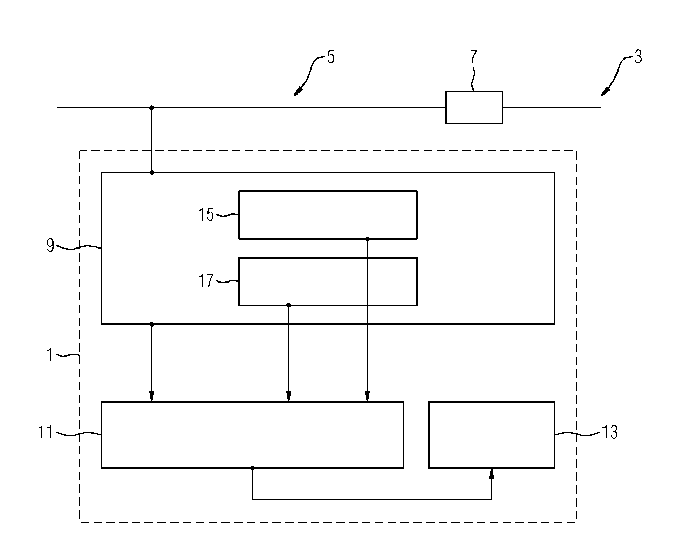

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit der Zeichnung näher erläutert werden.

Dabei zeigt die einzige Figur ein IPv6 ausführendes Netzwerkgerät 1 eines IPv6-basierten Netzwerks 3. Das Netzwerkgerät 1 befindet sich in einem Subnetz 5 des Netzwerks 3. Das Subnetz 5 ist über wenigstens einen IPv6-Router 7 an das Netzwerk 3 angeschlossen. Das Netzwerkgerät 1 ist beispielsweise eines von mehreren über das Netzwerk 3 miteinander verbundenen Automatisierungsgeräten eines Automatisierungssystems.

Das Netzwerkgerät 1 weist einen IPv6-Stack 9, eine Diagnosekomponente 11 und optional einen Webserver 13 auf. Der IPv6-Stack 9 verwaltet wenigstens eine IPv6-Adresstabelle 15 von IPv6-Adressen des Netzwerks 3 und eine IPv6-Routingtabelle 17 mit Routinginformationen zur Versendung von Nachrichten in das Netzwerk 3.

Der IPv6-Router 7 sendet gemäß dem IPv6 gestaltete Router-Advertisement-Nachrichten (ICMPv6 Router Advertisements) in das Subnetz 5, die von dem Netzwerkgerät 1 empfangen und von dessen IPv6-Stack 9 ausgewertet werden. Insbesondere kann eine Router-Advertisement-Nachricht Informationen zu Änderungen wenigstens einer IPv6-Adresstabelle 15 und/oder der IPv6-Routingtabelle 17 enthalten.

Die Diagnosekomponente 11 archiviert einerseits wenigstens die zur Diagnose einer Fehlkonfiguration des Netzwerkgeräts 1 relevanten Informationen, die in den von dem Netzwerkgerät 1 empfangenen Router-Advertisement-Nachrichten enthalten sind. Diese Informationen umfassen wenigstens die IPv6-Adresse des Absenders der Router-Advertisement-Nachricht (d. h. des jeweiligen Routers 7) und jede eine Konfiguration des Netzwerkgerätes ändernde Information, insbesondere Informationen zu Änderungen der wenigstens einen IPv6-Adresstabelle 15 und der IPv6-Routingtabelle sowie IPv6-Routingtabelle, aber auch beispielsweise DHCPv6-bezogene Router-Advertisement-Nachrichten.

Daneben greift die Diagnosekomponente 11 auf jede IPv6-Adresstabelle 15 und die IPv6-Routingtabelle 17 des IPv6-Stack 9 zu und archiviert wenigstens alle Änderungen jeder IPv6-Adresstabelle 15 und der IPv6-Routingtabelle 17.

Die von der Diagnosekomponente 11 archivierten Daten werden zur Diagnose einer Fehlkonfiguration des Netzwerkgerätes 1 ausgewertet. Dazu werden diese Daten beispielsweise von dem optionalen Webserver 13 visualisiert und extern ausgewertet. Alternativ oder zusätzlich kann die Diagnosekomponente 11 dazu ausgebildet sein, von ihr gespeicherte Daten selbst auszuwerten und lokale Meldungen zu erzeugen, um Anwender über Probleme und mögliche Maßnahmen zu informieren.

Die Diagnosekomponente 11 ist beispielsweise als eine Software realisiert, die über eine Programmierschnittstelle des IPv6-Stacks 9 zur Anwendungsprogrammierung mit dem IPv6-Stack verbunden ist. Alternativ ist die Diagnosekomponente 11 beispielsweise als ein Field Progammable Gate Array realisiert.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Netzwerkgerät
- 3: Netzwerk
- 5: Subnetz
- 7: IPv6-Router
- 9: IPv6-Stack
- 11: Diagnosekomponente
- 13: Webserver
- 15: IPv6-Adresstabelle
- 17: IPv6-Routingtabelle

## Patentansprüche

1. Verfahren zur Diagnose einer Fehlkonfiguration eines IPv6 ausführenden Netzwerkgerätes (1) eines IPv6-basierten Netzwerks (3) mit wenigstens einem IPv6-Router (7), der Router-Advertisement-Nachrichten an Netzwerkgeräte (1) des Netzwerks (7) sendet, wobei das Netzwerkgerät (1) mit einer Diagnosekomponente (11) versehen wird, von der die von dem Netzwerkgerät (1) empfangenen Router-Advertisement-Nachrichten jeweils wenigstens teilweise archiviert werden.

2. Verfahren nach Anspruch 1,
**dadurch gekennzeichnet, dass** von dem Netzwerkgerät (1) wenigstens eine IPv6-Adresstabelle (15) geführt wird, und dass von der Diagnosekomponente (11) Adressinhalte der wenigstens einen IPv6-Adresstabelle (15) archiviert werden.

3. Verfahren nach Anspruch 2,
**dadurch gekennzeichnet, dass** bei jeder Änderung einer IPv6-Adresstabelle (15) lediglich die Änderungen der IPv6-Adresstabelle (15) von der Diagnosekomponente (11) archiviert werden.

4. Verfahren nach einem der vorhergehenden Ansprüche, **dadurch gekennzeichnet, dass** von dem Netzwerkgerät (1) eine IPv6-Routingtabelle (17) geführt wird, und dass von der Diagnosekomponente (11) Routinginhalte der IPv6-Routingtabelle (17) archiviert werden.

5. Verfahren nach Anspruch 4,
**dadurch gekennzeichnet, dass** bei jeder Änderung einer IPv6-Routingtabelle (17) lediglich die Änderungen der IPv6-Routingtabelle (17) von der Diagnosekomponente (11) archiviert werden.

6. Verfahren nach einem der vorhergehenden Ansprüche, **dadurch gekennzeichnet, dass** von der Diagnosekomponente (11) archivierte Daten mittels der Diagnosekomponente (11) zur Diagnose einer Fehlkonfiguration des Netzwerkgerätes (1) ausgewertet werden.

7. Verfahren nach einem der vorhergehenden Ansprüche, **dadurch gekennzeichnet, dass** von der Diagnosekomponente (11) archivierte Daten mittels eines Webservers (13) visualisiert werden.

8. Verfahren nach einem der vorhergehenden Ansprüche, **dadurch gekennzeichnet, dass** von jeder von dem Netzwerkgerät (1) empfangenen Router-Advertisement-Nachricht wenigstens eine IPv6-Adresse des Absenders der Router-Advertisement-Nachricht und jede eine Konfiguration des Netzwerkgerätes (1) ändernde Information von der Diagnosekomponente (11) archiviert werden.

9. Netzwerkgerät (1) eines IPv6-basierten Netzwerks (7), das Netzwerkgerät (1) umfassend einen IPv6-Stack (9) zur Implementierung und Ausführung von IPv6 und eine Diagnosekomponente (11), die zur Durchführung des Verfahrens nach einem der vorhergehenden Ansprüche ausgebildet ist.

10. Netzwerkgerät (1) nach Anspruch 9,
**dadurch gekennzeichnet, dass** der IPv6-Stack (9) eine Programmierschnittstelle zur Anwendungsprogrammierung aufweist und die Diagnosekomponente (11) als eine über diese Programmierschnittstelle mit dem IPv6-Stack (9) verbundene Software realisiert ist.

11. Netzwerkgerät (1) nach Anspruch 10,
**dadurch gekennzeichnet, dass** die Diagnosekomponente (11) als ein Field Progammable Gate Array realisiert ist.

12. Netzwerkgerät (1) nach einem der Ansprüche 9 bis 11, **gekennzeichnet durch** einen Webserver (13), der zur Visualisierung von der Diagnosekomponente (11) archivierter Daten ausgebildet ist.
